# EUROPEAN PATENT APPLICATION

(11) **EP 4 439 939 A1**
(43) Date of publication of application: **02.10.2024**
(21) Application number: 24164034.1
(22) Date of filing: 18.03.2024
(51) Int. Cl.: H02K 5/173, H02K 7/04, H02K 21/14, H02K 5/24

(54) **MOTOR**

(30) Priority: 22.03.2023 JP 2023046000
(71) Applicant: Minebea Mitsumi Inc., Kitasaku-gun, Nagano 3890293 (JP)
(72) Inventor: NARA, Kiyohisa, Nagano 389-0293 (JP)
(74) Representative: Zabel, Julia Elisabeth

(57) **Abstract**

Object

An example of an object is to provide a motor with a long life.

Solution

A shaft (S), a magnet (112 or 212), a coil (120), a first bearing (113a) disposed at one end part (S1) side of the shaft (S) in an axis X direction, a second bearing (113b) disposed at the other end part (S2) side of the shaft (S) in the axis X direction, a holder (115) fixed to the first bearing (113a), a cover (114) fixed to the first bearing (113a) through the holder (115) in a radial direction, and an elastic member (116) disposed inside the holder (115) in the radial direction are provided, and the elastic member (116) is connected to the holder (115) and the first bearing (113a) in the axis X direction.

## Description

### Technical Field

The present invention relates to a motor.

### Background Art

Conventionally, there is known a motor including a bearing device disposed with bearings at both ends of a shaft. In the bearing device, both the bearings are preloaded in directions away from each other in an axial direction. For example, Patent Document 1 discloses a bearing device provided with a preload spring.

### Citation List

### Patent Literature

Patent Document 1: JP 06-84765 UM-A

### Summary of Invention

### Technical Problem

In this type of motor, for example, the life of the motor is preferably extended.

An example of an object of the present invention is to provide a motor with a long life.

### Solution to Problem

A motor according to the present invention includes a shaft, a magnet, a coil, a first bearing disposed at one end part of the shaft in an axial direction, a second bearing disposed at the other end part of the shaft in the axial direction, a holder fixed to the first bearing, a cover fixed to the first bearing through the holder in a radial direction, and an elastic member disposed inside the holder in the radial direction, and the elastic member is connected to the holder and the first bearing in the axial direction.

### Brief Description of Drawings

FIG. 1 is a cross-sectional view of a motor according to a first embodiment being one example of the present invention.
FIG. 2 is a cross-sectional view of only the bearing device in the motor according to the first embodiment, which is an example of the present invention.
FIG. 3 is a cross-sectional view obtained by excerpting only a bearing device in a motor according to a second embodiment being one example of the present invention.

### Description of Embodiments

In the description of each embodiment of the present invention, for convenience of description, an arrow ab direction along an axis X in each figure is referred to as an axial direction. In the axial direction, an arrow a direction (direction from a second bearing 113b toward a first bearing 113a) is defined as a lower side or one side. An arrow b direction (direction from the first bearing 113a toward the second bearing 113b) along the axis X is defined as an upper side or the other side. In addition, a direction (arrow cd direction) being orthogonal to the axial direction and approaching or separating from the axis X is referred to as a radial direction, an arrow c direction away from the axis X is referred to as an outer side or one side, and an arrow d direction approaching the axis X is referred to as an inner side or the other side.

### First Embodiment

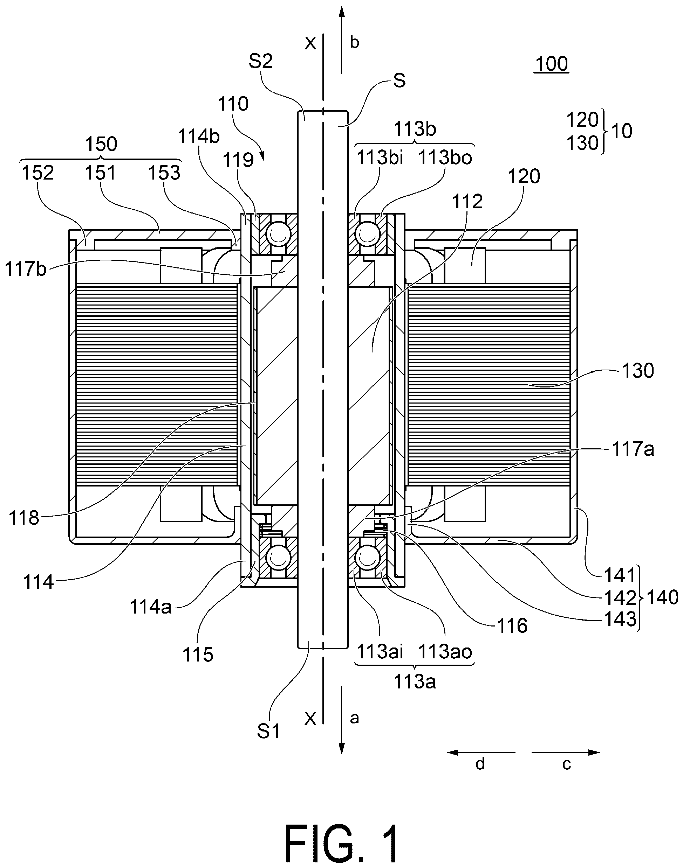

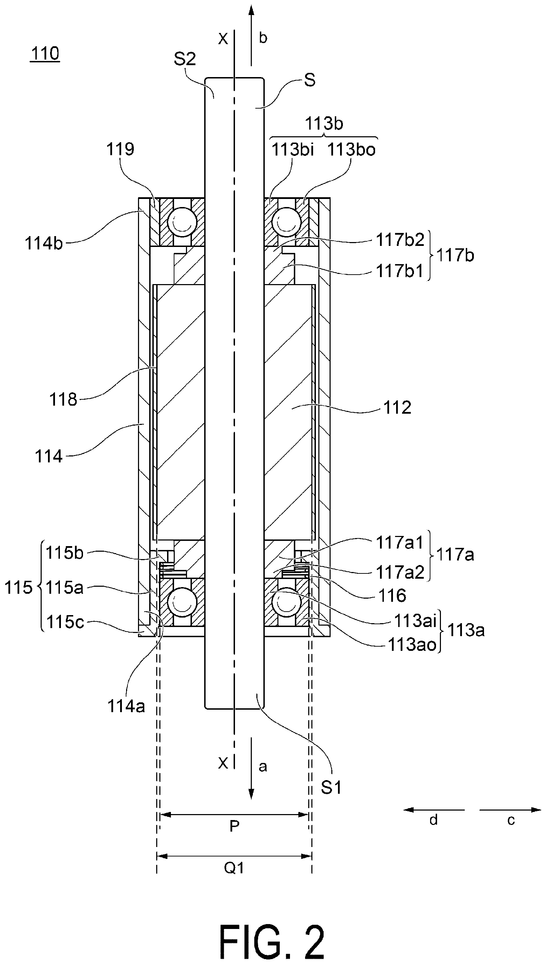

A first embodiment being one example of the present invention will be described below with reference to the drawings. FIG. 1 is a cross-sectional view illustrated by cutting a motor 100 according to the present embodiment along a plane including the axis X. FIG. 2 is a diagram illustrating only the bearing device 110 extracted from FIG. 1.

As illustrated in FIG. 1, the motor 100 includes the bearing device 110, a coil 120, a magnetic body 130, a case 140, and a lid 150. In the present embodiment, the magnetic body 130 is constituted by a plurality of magnetic bodies (electromagnetic steel plates) stacked in the axial direction. The case 140 is a tubular member including an opening at the other side (in the arrow b direction) in the axial direction. The case 140 includes a tubular part (cylindrical part) 141, a bottom part 142, and a protruding part 143 having an annular shape. The cylindrical part 141 is a part having a cylindrical shape with the axis X as a central axis. The bottom part 142 is a flat plate part having an annular shape and extending inward (in the arrow d direction) in the radial direction from an end part of the cylindrical part 141 at one side (in the arrow a direction) in the axial direction. The protruding part 143 is a cylindrical part extending from an end part of the bottom part 142 at the inner side (in the arrow d direction) in the radial direction toward the other side (in the arrow b direction) in the axial direction. In the axial direction, a dimension (length) of the cylindrical part 141 is larger than a dimension (length) of the protruding part 143.

The lid 150 is a lid-like member covering the opening at the other side (in the arrow b direction) in the axial direction of the cylindrical part 141 of the case 140, and includes a flat plate part 151, an outer peripheral part (engaging part) 152, and an inner peripheral part (projection part) 153. The flat plate part 151 is a part having an annular shape with the axis X as a central axis. In the radial direction, the flat plate part 151 has the same or substantially the same dimensions (inner diameter and outer diameter) as dimensions of the bottom part 142 of the case 140. The engaging part 152 is an annular part protruding to the one side (in the arrow a direction) in the axial direction at a slightly inner side (in the arrow d direction) from an end part of the flat plate part 151 at the outer side (in the arrow c direction) in the radial direction. The projection part 153 is a cylindrical part protruding to the one side (in the arrow a direction) in the axial direction from an end part of the flat plate part 151 at the inner side (in the arrow d direction) in the radial direction. In the axial direction, a length of the engaging part 152 is substantially the same as a length of the projection part 153.

The engaging part 152 of the lid 150 is engaged with an end part (outer peripheral end part) of the cylindrical part 141 of the case 140 at the other side (in the arrow b direction) in the axial direction. In the radial direction, an outer dimension (outer diameter) of the engaging part 152 of the lid 150 is the same or substantially the same as an inner dimension (inner diameter) of the cylindrical part 141 of the case 140. The engaging part 152 of the lid 150 is inserted into the inner side (in the arrow d direction) in the radial direction of an end part of the cylindrical part 141 of the case 140 at the other side (in the arrow b direction) in the axial direction. The engaging part 152 of the lid 150 is fixed to the cylindrical part 141 of the case 140 by adhesion, press-fitting, or the like. Thus, the lid 150 is fixed to the case 140 through the engaging part 152.

An inner diameter (inner dimension in the radial direction) of the protruding part 143 of the case 140 is the same or substantially the same as an inner diameter (inner dimension in the radial direction) of the projection part 153 of the lid 150. In the radial direction, an outer surface (outer peripheral surface) of a cover 114 (to be described later) having a cylindrical shape of the bearing device 110 is fixed to an inner surface (inner peripheral surface) of the protruding part 143 of the case 140 and an inner surface (inner peripheral surface) of the projection part 153 of the lid 150 with an adhesive or the like. The coil 120 and the magnetic body 130 are accommodated in a cylindrical space defined by the case 140, the lid 150, and the cover 114 of the bearing device 110. The cylindrical space has the axis X as a central axis. Thus, in the radial direction, the cover 114 of the bearing device 110 is disposed inside the coil 120 (in the arrow d direction).

The magnetic body 130 is formed of, for example, a stacked body stacked with a plurality of electromagnetic steel plates formed of a soft magnetic material in the axial direction. In the radial direction, the magnetic body 130 is connected to an inner surface (in the arrow d direction) of the cylindrical part 141 of the case 140, and extends inward (in the arrow d direction) up to the vicinity of the cover 114 of the bearing device 110. Alternatively, the magnetic body 130 may be connected and fixed to the cover 114 of the bearing device 110, or may be connected and fixed to both the cylindrical part 141 of the case 140 and the cover 114 of the bearing device 110. In the motor 100 according to the present embodiment, six magnetic bodies 130 are arranged radially at equal angular intervals in a peripheral direction (direction of rotation about the axis X). However, the number of the magnetic bodies 130 is not limited to six, and may be any number according to the design of the motor 100. The coil 120 is wound around each magnetic body 130 through an insulator (not illustrated).

The coil 120 and the magnetic bodies 130 constitute a stator 10 of the motor 100. As described above, the magnetic body 130 is fixed to the cover 114 of the bearing device 110 directly or through the case 140 and the lid 150. Accordingly, the cover 114 of the bearing device 110 is directly or indirectly fixed to the stator 10. That is, the cover 114 of the bearing device 110 is one of stationary members that are stationary compared with a rotating shaft S and a rotor such as a magnet 112. Note that the stationary member does not need to be a member that is completely stationary, and includes members that are stationary compared with the rotating shaft S and the rotor such as the magnet 112.

As illustrated in FIG. 2, the bearing device 110 includes the shaft S, the magnet 112, the first bearing 113a, the second bearing 113b, the cover 114 having a cylindrical shape, a holder 115, and an elastic member 116. In the radial direction, the shaft S, the magnet 112, the first bearing 113a, the second bearing 113b, and the elastic member 116 are disposed inside the cover 114. That is, the cover 114 is a sleeve covering the shaft S, the magnet 112, the first bearing 113a, the second bearing 113b, and the elastic member 116 in the radial direction. The cover 114 includes a first end part 114a at the first bearing 113a side (in the one side in the axial direction, the arrow a direction) and a second end part 114b at the second bearing 113b side (in the other side in the axial direction, the arrow b direction). The cover 114 is made of, for example, a ceramic. However, the cover 114 may be formed of another material such as a non-magnetic metal or resin.

The shaft S is a rod-like member extending in the axial direction and having a columnar shape or a substantially columnar shape. The shaft S includes one end part S1 at the one side (in the arrow a direction) in the axial direction and the other end part S2 at the other side (in the arrow b direction) in the axial direction. In the axial direction, the first bearing 113a is disposed at the one end part S1 side of the shaft S. Further, in the axial direction, the second bearing 113b is disposed at the other end part S2 side of the shaft S.

The first bearing 113a is a ball bearing including an inner ring 113ai, an outer ring 113ao, and rolling bodies. It should be noted that the first bearing 113a is not limited to the ball bearing having this form, but may be various other bearings such as a ball bearing including balls fitted in recesses provided at a surface (outer peripheral surface) of the shaft at the outer side (in the arrow c direction) in the radial direction and an outer ring. The inner ring 113ai of the first bearing 113a is press-fitted or bonded to the surface (outer peripheral surface) of the shaft S at the outer side (in the arrow c direction) in the radial direction. Thus, the inner ring 113ai of the first bearing 113a is fixed to the shaft S.

The second bearing 113b has the same dimensions and configuration as the first bearing 113a. The second bearing 113b is a ball bearing including an inner ring 113bi, an outer ring 1 13bo, and rolling bodies. Note that the second bearing 113b is not limited to a ball bearing having this form, but may be any of various other bearings such as a sleeve bearing, and a ball bearing including balls fitted in recesses provided at an outer surface (outer peripheral surface) of the shaft (in the arrow c direction) in the radial direction and an outer ring. The inner ring 113bi of the second bearing 113b is press-fitted or bonded to the surface (outer peripheral surface) of the shaft S at the outer side (in the arrow c direction) in the radial direction. Thus, the inner ring 113bi of the second bearing 113b is fixed to the shaft S.

The second end part 114b of the cover 114 having the cylindrical shape is fixed to the outer side (in the arrow c direction) of the outer ring 113bo of the second bearing 113b in the radial direction through a spacer 119 having an annular shape. In the axial direction, the spacer 119 has the same or substantially the same dimensions as dimensions of the second bearing 113b. However, the dimension of the spacer 119 in the axial direction may be different from the dimension of the second bearing 113b. In the radial direction, an inner diameter of the spacer 119 is equal to or substantially equal to an outer diameter of the outer ring 113bo of the second bearing 113b, and an outer diameter of the spacer 119 is equal to or substantially equal to an inner diameter of the cover 114. An outer surface (in the arrow c direction) of the outer ring 113bo of the second bearing 113b in the radial direction and an inner surface (in the arrow d direction) of the spacer 119 in the radial direction are fixed to each other, and a radially outer surface (in the arrow c direction) of the spacer 119 and an inner surface (in the arrow d direction) of the cover 114 in the radial direction are fixed to each other, by press-fitting or bonding. The second bearing 113b rotatably supports the shaft S with respect to the cover 114.

A cylindrical part 115a of the holder 115 (to be described later) is fixed to the outer side (in the arrow c direction) of the outer ring 113ao of the first bearing 113a in the radial direction. The first bearing 113a rotatably supports the shaft S with respect to the holder 115.

The holder 115 has a three-dimensional shape obtained by rotating a cross section having a substantially S-like shape around the axis X. In other words, the holder 115 includes an opening part and a bottom part provided with a circular hole at the center, and has a three-dimensional shape having a cup shape. In the cup shape, the opening part faces the one side (in the arrow a direction) and the bottom part faces the other side (in the arrow b direction) in the axial direction. The holder 115 is formed of a metal such as aluminum, copper, or iron. However, the holder 115 may be formed of other materials such as resin. The holder 115 may be formed of a material softer than the material of the cover 114. The holder 115 includes the cylindrical part 115a, an inner peripheral part 115b, and an outer peripheral part 115c.

The cylindrical part 115a of the holder 115 is a cylindrical part extending in the axial direction. In the axial direction, the cylindrical part 115a of the holder 115 has dimensions larger than the dimensions of the first bearing 113a. In the radial direction, the cylindrical part 115a of the holder 115 has a thickness equal or substantially equal to a thickness of the spacer 119. Further, in the radial direction, an inner diameter and an outer diameter of the cylindrical part 115a of the holder 115 are equal or substantially equal to the inner diameter and the outer diameter of the spacer 119.

In the radial direction, the inner diameter of the cylindrical part 115a of the holder 115 is equal to or substantially equal to an outer diameter of the outer ring 113ao of the first bearing 113a, and the outer diameter of the cylindrical part 115a is equal to or substantially equal to the inner diameter of the cover 114. An outer surface (in the arrow c direction) of the outer ring 113ao of the first bearing 113a in the radial direction and an inner surface (in the arrow d direction) of the cylindrical part 115a of the holder 115 in the radial direction are fixed to each other and an outer surface (in the arrow c direction) of the cylindrical part 115a of the holder 115 in the radial direction and an inner surface (in the arrow d direction) of the cover 114 in the radial direction are fixed to each other, by press-fitting or bonding. In other words, the cover 114 is fixed to the first bearing 113a through the holder 115 in the radial direction.

The inner peripheral part 115b of the holder 115 is an annular part extending from an end part of the cylindrical part 115a at the other side (in the arrow b direction) in the axial direction toward the inner side (in the arrow d direction) in the radial direction to such an extent as not to be in contact with a first rigid member 117a (to be described later). In the axial direction, the inner peripheral part 115b of the holder 115 is disposed at the other side (in the arrow b direction) of the first bearing 113a so as to be formed with a gap from the first bearing 113a.

The outer peripheral part 115c of the holder 115 is an annular part extending outward (in the arrow c direction) in the radial direction from an end part of the cylindrical part 115a at the one side (in the arrow a direction) in the axial direction by a dimension equal to or substantially equal to a thickness of the first end part 114a of the cover 114. The holder 115 is positioned with respect to the cover 114 by a surface at the other side of the outer peripheral part 115c of the holder 115 and the first end part 114a of the cover 114 being in contact with each other in the axial direction.

The holder 115 holds the elastic member 116. In the present embodiment, the elastic member 116 is a substantially cylindrical and spiral coil spring having the axis X as a central axis. However, the elastic member 116 may be a member formed of, for example, a material having rubber elasticity and having various shapes. Examples of the material having rubber elasticity include thermosetting elastomers such as natural rubber and synthetic rubber, and thermoplastic elastomers such as styrene-based, olefin-based, vinyl chloride-based, acryl-based, polyamide-based, polyester-based, and polyurethane-based elastomers. Further, a plurality of elastic members 116 may be arranged side by side in the peripheral direction.

The elastic member 116 is disposed at the inner side (in the arrow d direction) of the holder 115 in the radial direction. To be more specific, the elastic member 116 is disposed at the inner side (in the arrow d direction) of the cylindrical part 115a of the holder 115 in the radial direction, and is disposed at the one side (in the arrow a direction) of the inner peripheral part 115b of the holder 115 in the axial direction. In the axial direction, the elastic member 116 is disposed between the inner peripheral part 115b of the holder 115 and the outer ring 113ao of the first bearing 113a. In the radial direction, the elastic member 116 surrounds the shaft S and the first rigid member 117a (to be described later) from the outside (in the arrow c direction).

In the axial direction, the elastic member 116 is connected to the inner peripheral part 115b of the holder 115 and the outer ring 113ao of the first bearing 113a. Note that in this specification, when a certain member is "connected" to another member, it is sufficient that the certain member is in contact with the other member, and the certain member need not be immovably fixed to the other member. The elastic member 116 biases the inner peripheral part 115b of the holder 115 and the outer ring 113ao of the first bearing 113a. To be more specific, in the axial direction, the elastic member 116 presses the inner peripheral part 115b of the holder 115 and the outer ring 113ao of the first bearing 113a in directions away from each other. That is, the elastic member 116 presses the inner peripheral part 115b of the holder 115 toward the other side (in the arrow b direction) in the axial direction. In addition, the elastic member 116 presses the outer ring 113ao of the first bearing 113a toward the one side (in the arrow a direction) in the axial direction. As described above, since the outer ring 113ao of the first bearing 113a and the holder 115 are fixed to each other, the elastic member 116 is held in a state stored with elastic energy in the axial direction.

As described above, the second end part 114b of the cover 114 having the cylindrical shape is fixed to the outer side (in the arrow c direction) of the outer ring 113bo of the second bearing 113b in the radial direction through the spacer 119 having an annular shape, and the holder 115 is fixed to the outer side (in the arrow c direction) of the outer ring 113ao of the first bearing 113a in the radial direction. Thus, the elastic member 116 applies preloads to the outer ring 113ao of the first bearing 113a and the outer ring 113bo of the second bearing 113b so as to move the outer ring 113ao of the first bearing 113a and the outer ring 113bo of the second bearing 113b away from each other in the axial direction.

In the present embodiment, the magnet 112 is a cylindrical permanent magnet having four magnetic poles. In the cylindrical permanent magnet, different magnetic poles (S poles and N poles) are alternately magnetized in the peripheral direction. However, the number of magnetic poles of the magnet 112 is not limited to four and may be any number according to the design of the motor 100. In the radial direction, an inner diameter of the magnet 112 is equal to an outer diameter of the shaft S or slightly larger than the outer diameter of the shaft S. The magnet 112 is fixed to the surface of the shaft S at the outer side (in the arrow c direction) in the radial direction by adhesion or press-fitting. In the axial direction, the magnet 112 is disposed between the first bearing 113a and the second bearing 113b so as to be separated from the first bearing 113a and the second bearing 113b by predetermined distances. A size (outer diameter) Q1 of the magnet 112 in the radial direction is larger than a size (outer diameter) P of the first bearing 113a and the second bearing 113b in the radial direction.

A protective member 118 having a cylindrical shape is provided so as to cover the surface (outer peripheral surface) of the magnet 112 at the outer side (in the arrow c direction) in the radial direction. The protective member 118 is provided, for example, to prevent breakage or scattering of the magnet 112. However, the motor 100 does not need to include the protective member 118. In the radial direction, the surface of the protective member 118 at the outer side (in the arrow c direction) and the surface of the cover 114 at the inner side (in the arrow d direction) are spaced apart from and face each other.

A member (first rigid member) 117a is disposed between the magnet 112 and the first bearing 113a in the axial direction. The first rigid member 117a supports the first bearing 113a with respect to the magnet 112. Further, a member (second rigid member) 117b is disposed between the magnet 112 and the second bearing 113b in the axial direction. The second rigid member 117b supports the second bearing 113b with respect to the magnet 112. Note that in this specification, the "rigid member" refers to a member having a high rigidity compared with the elastic member 116 (that is, a member less likely to be elastically deformed compared with the elastic member 116). The first rigid member 117a and the second rigid member 117b have the same shape and the same dimensions as each other, and are disposed so as to be symmetrical with respect to a plane orthogonal to the axis X with the magnet 112 interposed between the first rigid member 117a and the second rigid member 117b. However, the first rigid member 117a and the second rigid member 117b may have shapes and dimensions different from each other.

The first rigid member 117a and the second rigid member 117b have annular parts 117a1 and 117b1 and protruding parts 117a2 and 117b2, respectively. In the radial direction, an inner diameter of the annular parts 117a1 and 117b1 is equal to the outer diameter of the shaft S or is slightly larger than the outer diameter of the shaft S. The annular parts 117a1 and 117b1 are fixed to the surface of the shaft S at the outer side (in the arrow c direction) in the radial direction by bonding or press-fitting. In the radial direction, an outer diameter of the annular parts 117a1 and 117b1 is smaller than an outer diameter of the magnet 112. In the radial direction, the outer diameter of the annular parts 117a1 and 117b1 is smaller than an inner diameter of the inner peripheral part 115b of the holder 115. In the radial direction, the annular part 117a1 of the first rigid member 117a faces the inner peripheral part 115b of the holder 115 at a predetermined distance.

The protruding parts 117a2 and 117b2 are annular parts protruding in the axial direction from surfaces of the annular parts 117a1 and 117b1 away from the magnet 112 and being in contact with the inner ring 113ai of the first bearing 113a and the inner ring 113bi of the second bearing 113b, respectively. The protruding parts 117a2 and 117b2 protrude from regions of the annular parts 117a1 and 117b1 at the inner side (in the arrow d direction) in the radial direction, respectively.

The first rigid member 117a is connected to the magnet 112 and the inner ring 113ai of the first bearing 113a. The second rigid member 117b is connected to the magnet 112 and the inner ring 113bi of the second bearing 113b. The first rigid member 117a and the second rigid member 117b are formed of a metal such as copper. The first rigid member 117a and the second rigid member 117b may be formed of other materials, but are preferably formed of metals having large specific gravities when serving as balancers for adjusting a rotational balance of the shaft S.

The motor 100 is a brushless DC motor of an inner rotor type. When the motor 100 is operated, the shaft S, the magnet 112, the inner ring 113ai of the first bearing 113a, the inner ring 113bi of the second bearing 113b, the first rigid member 117a, the second rigid member 117b, and the protective member 118 integrally rotate.

The motor 100 according to the present embodiment can be manufactured by a method of assembling the configuration at the stationary side, that is, the coil 120, the magnetic body 130, the case 140, and the lid 150, and then inserting the separately assembled bearing device 110. Thus, coaxiality between the rotating side and the stationary side and coaxiality between the first bearing 113a and the second bearing 113b can be enhanced.

In assembling the bearing device 110, for example, after the holder 115 is inserted into the cover 114 and fixed by bonding or the like, the first bearing 113a is press-fitted into the holder 115 with the elastic member 116 interposed between the first bearing 113a and the holder 115, and the outer ring 113ao of the first bearing 113a and the holder 115 are fixed by bonding or the like. At this time, the outer ring 113ao of the first bearing 113a and the holder 115 are fixed while the elastic member 116 is applying a preload such that the outer ring 113ao of the first bearing 113a and the outer ring 113bo of the second bearing 113b move away from each other in the axial direction. Thus, the motor 100 has a high resonant frequency and is suitable for high-speed rotation applications. In addition, since the holder 115 is fixed to the cover 114 at the outer peripheral surface of the cylindrical part 115a, the cover 114 and the holder 115 are unlikely to wobble when being fixed to each other, and thus coaxiality of the motor 100 is likely to be high. As a result, in the motor 100 according to the present embodiment, vibration due to rotation is less likely to occur, and the life thereof is extended.

In addition, since the motor 100 according to the present embodiment does not need to include such a large spring that one end part is in contact with the outer ring 113ao of the first bearing 113a and the other end part is in contact with the outer ring 113bo of the second bearing 113b, there is room in an interior space of the cover 114, the outer diameter of the magnet 112 can be designed to be large, and the torque can be increased.

### Second Embodiment

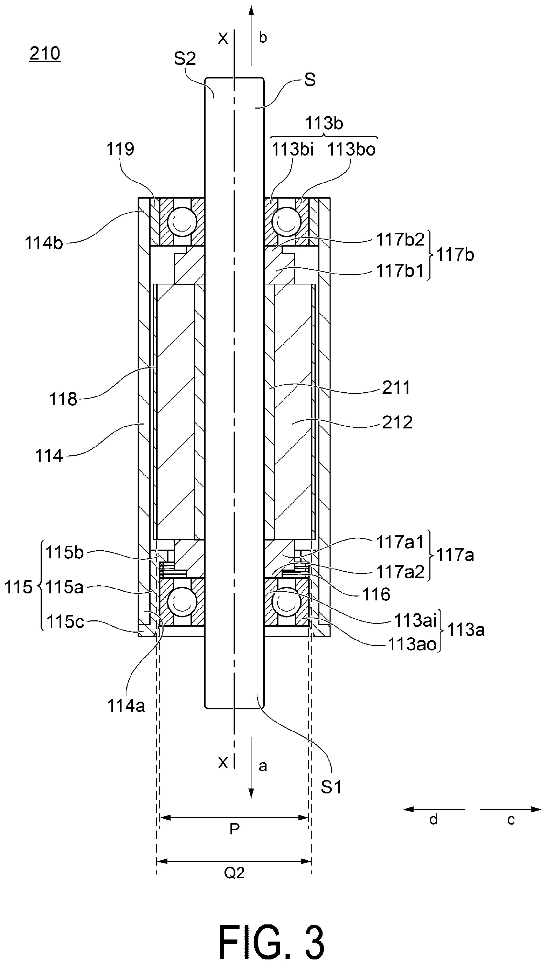

Next, a second embodiment being one example of the present invention will be described with reference to the drawings. FIG. 3 is a cross-sectional view of only a bearing device 210 of a motor according to the present embodiment. The motor according to the present embodiment has a configuration similar to the configuration of the motor 100 according to the first embodiment except that the bearing device 210 is provided instead of the bearing device 110. The bearing device 210 has a configuration similar to the configuration of the bearing device 110 of the motor 100 according to the first embodiment except that the bearing device 210 includes a yoke 211 and a magnet 212 instead of the magnet 112. Members and components having the same functions and configurations as the members and components of the first embodiment are given the same reference signs, and detailed descriptions of the members and components will be omitted below.

In the present embodiment, the magnet 212 is a permanent magnet having a cylindrical shape and having four magnetic poles. In the permanent magnet, different magnetic poles (S poles and N poles) are alternately magnetized in a peripheral direction. However, the number of magnetic poles of the magnet 212 is not limited to four and may be any number in accordance with the design of the motor. In a radial direction, the inner diameter of the magnet 212 is larger than the outer diameter of a shaft S. The outer diameter of the magnet 212 is, for example, equal to the outer diameter of the magnet 112 of the motor 100 according to the first embodiment. The magnet 212 is fixed to the shaft S through the yoke 211 having a cylindrical shape.

In an axial direction, a length of the yoke 211 is equal to or substantially equal to a length of the magnet 212. In the radial direction, an inner diameter of the yoke 211 is equal to the outer diameter of the shaft S or slightly larger than the outer diameter of the shaft S. In the radial direction, an outer diameter of the yoke 211 is equal to the inner diameter of the magnet 212 or slightly smaller than the inner diameter of the magnet 212. An outer surface (in the arrow c direction) of the shaft S in the radial direction and an inner surface (in the arrow d direction) of the yoke 211 in the radial direction are fixed to each other, and an outer surface (in the arrow c direction) of the yoke 211 in the radial direction and an inner surface (in the arrow d direction) of the magnet 212 in the radial direction are fixed to each other, by press-fitting or bonding.

In the axial direction, the yoke 211 and the magnet 212 are disposed between the first bearing 113a and the second bearing 113b so as to be separated from the first bearing 113a and the second bearing 113b by predetermined distances. A size (outer diameter) Q2 of the magnet 212 in the radial direction is larger than a size (outer diameter) P of the first bearing 113a and the second bearing 113b in the radial direction.

The motor according to the present embodiment has a high coaxiality, a long life, and a large torque based on a principle similar to the matters described above in the motor 100 according to the first embodiment. In addition, since the magnet 212 is fixed to the shaft S through the yoke 211, cracking of the magnet 212 can be prevented and the magnet 212 can be easily magnetized.

As described above, the motor according to the present invention has been described with reference to preferred embodiments, but the motor according to the present invention is not limited to the configuration of the embodiments described above. For example, although the case 140 has the cylindrical shape in the above-described embodiments, the case may have any shape in the motor according to the present invention. In addition, in the above-described embodiments, the bearing devices 110 and 210 include the first rigid member 117a and the second rigid member 117b. However, in the motor according to the present invention, the bearing device may include only one of the rigid members, or does not need to include any rigid member. Further, the first rigid member 117a and the second rigid member 117b do not need to have the same shape and the same size.

In the above embodiments, the cover 114 and the spacer 119 are separate members independent of each other, but the cover and the spacer may be formed as an integrated member. Similarly, although the cover 114 and the holder 115 are separate members independent of each other in the above-described embodiments, the cover and the holder may be formed as an integrated member.

In the above-described embodiments, the outer diameters Q1 and Q2 of the magnets 112 and 212 are larger than the outer diameter P of the first bearing 113a and the second bearing 113b. However, in the motor according to the present invention, the outer diameter of the magnet may be equal to the outer diameter of the bearings or smaller than the outer diameter of the bearings. In addition, in the above-described embodiments, the second bearing 113b has the same dimensions and configuration as the first bearing 113 a, but in the motor according to the present invention, the first bearing and the second bearing may have different dimensions and configurations from each other.

In addition, the motor according to the present invention can be appropriately modified and the shapes, the dimensions, and the combinations of the various configurations can be modified, by a person skilled in the art according to previously known knowledge. Such modifications are of course included in the scope of the present invention as long as these modifications still include the configurations of the present invention.

### Reference Signs List

100: Motor, 112, 212: Magnet, 113a: First bearing, 113b: Second bearing, 114: Cover, 115: Holder, 116: Elastic member, 117a, 117b: Rigid member, 118: Protective member, 119: Spacer, 120: Coil, S: Shaft.

## Claims

1. A motor (100) comprising:
a shaft (S);
a magnet (112 or 212);
a coil (120);
a first bearing (113a) disposed at one end part (S1) side of the shaft (S) in an axial direction;
a second bearing (113b) disposed at the other end part (S2) side of the shaft (S) in the axial direction;
a holder (115) fixed to the first bearing (113a);
a cover (114) fixed to the first bearing (113a) through the holder (115) in a radial direction; and
an elastic member (116) disposed inside the holder (115) in the radial direction,
wherein the elastic member (116) is connected to the holder (115) and the first bearing (113a) in the axial direction.

2. The motor (100) according to claim 1,
wherein the first bearing (113a) includes an outer ring (113ao),
the holder (115) includes an inner peripheral part (115b), and
the elastic member (116) is connected to the outer ring (113ao) of the first bearing (113a) and the inner peripheral part (115b) of the holder (115).

3. The motor (100) according to claim 1 or 2,
wherein the magnet (112 or 212) is disposed inside the cover (114) in the radial direction.

4. The motor (100) according to any one of claims 1 to 3, further comprising;
a member (117a) having rigidity with respect to the elastic member (116),
wherein the member (117a) having rigidity supports the first bearing (113a) with respect to the magnet (112 or 212).

5. The motor (100) according to claim 4,
wherein the first bearing (113a) includes an inner ring (113ai),
the shaft (S) is fixed to the inner ring (1 13ai) of the first bearing (113a), and
the member (117a) having rigidity is connected to the magnet (112 or 212) and the inner ring (1 13ai) of the first bearing (113a).

6. The motor (100) according to claim 4 or 5,
wherein the member (117a) having rigidity is a balancer configured to adjust a rotational balance of the shaft (S).

7. The motor (100) according to any one of claims 1 to 6,
wherein the cover (114) is a stationary member.

8. The motor (100) according to any one of claims 1 to 7, further comprising:
a stator (10) including the coil (120),
wherein the cover (114) is fixed to the stator (10).

9. The motor (100) according to any one of claims 1 to 8,
wherein a size of the magnet (112 or 212) in the radial direction is larger than a size of the first bearing (113a) or the second bearing (113b) in the radial direction.
